# EUROPÄISCHE PATENTSCHRIFT

(11) **EP 0 807 321 B1**
(45) Veröffentlichungstag und Bekanntmachung des Hinweises auf die Patenterteilung: **12.08.1998**
(21) Anmeldenummer: 95942158.7
(22) Anmeldetag: 14.12.1995
(51) Int. Cl.: H01M 8/02, H01M 8/04

(54) **BRENNSTOFFZELLENMODUL, BEI DEM ZELLENSTAPEL, KATALYTISCHE VERBRENNUNGSEINRICHTUNG UND REFORMER IN EINEM ISOLIERENDEN SCHUTZGEHÄUSE ZUSAMMENGEFASST SIND**
FUEL CELL MODULAR ARRANGEMENT WITH FUEL CELL STACKS, CATALYTIC COMBUSTION DEVICE AND REFORMER INTEGRATED IN AN INSULATING PROTECTIVE HOUSING
AGENCEMENT MODULAIRE DE CELLULES ELECTROCHIMIQUES EMPILEES, DISPOSITIF DE COMBUSTION CATALYTIQUE ET REGENERATEUR INTEGRES DANS UN BOITIER DE PROTECTION ISOLANT

(30) Priorität: 27.12.1994 DE 4446841
(43) Veröffentlichungstag der Anmeldung: 19.11.1997
(73) Patentinhaber: MTU MOTOREN- UND TURBINEN-UNION FRIEDRICHSHAFEN GMBH, D-88040 Friedrichshafen (DE)
(72) Erfinder: KRAUS, Peter, D-85598 Baldham (DE); HUPPMANN, Gerhard, D-83620 Feldkirchen-Westerham (DE)
(74) Vertreter: Winter, Josef
(86) Internationale Anmeldenummer: EP9504951
(87) Internationale Veröffentlichungsnummer: WO9620506

(56) Entgegenhaltungen:
- EP-A- 0 580 918
- US-A- 4 395 468
- US-A- 5 084 363
- US-A- 5 340 664

## Beschreibung

Die Erfindung betrifft ein Brennstoffzellenmodul mit einer durch in einem oder mehreren Brennstoffzellenstapeln angeordneten Brennstoffzellen gebildeten und von einem thermisch isolierenden Schutzgehäuse umgebenen Brennstoffzellanordnung mit einem Anodeneingang zur Zuführung von Brenngas zu den Anoden der Brennstoffzellen, einem Anodenausgang zur Abführung des verbrannten Brenngases von den Anoden, einem Kathodeneingang zur Zuführung von Kathodengas zu den Kathoden der Brennstoffzellen und einem Kathodenausgang zur Abführung des verbrauchten Kathodengases von den Kathoden, wobei eine katalytische Verbrennungseinrichtung zur Verbrennung brennbarer Restbestandteile des verbrannten Brenngases sowie eine Reformiereinrichtung zur Reformierung des dem Anodeneingang der Brennstoffzellen zuzuführenden Brenngases vorgesehen sind.

Bisher bekannte Anlagen mit Hochtemperaturbrennstoffzellen, wie Brennstoffzellen mit Alkalikarbonat-Schmelzelektrolyten (MCFC-Zellen) sind aus einer Vielzahl von untereinander gastechnisch und regelungstechnisch verschalteten einzelnen Anlagenkomponenten aufgebaut. Dies mag vor allem für die Konzeption von Versuchs- und Testanlagen eine geeignete und praktikable Technik darstellen, ist jedoch aus Gründen der großen Komplexität, mangelnder thermodynamischer Effizienz und Kosteneffizienz nicht der richtige Weg, um wirtschaftlich Anlagen zu bauen. Neuere Kostenschätzungen für nach diesen Prinzipien aufgebaute Anlagen zeigen, daß selbst unter der Annahme von in Großserie produzierten Komponenten die sogenannte "Balance of Plant", also die Anlagenperipherie etwa zwei Drittel bis drei Viertel der gesamten Investitionskosten beansprucht. Diese Peripheriekomponenten sind keine sogenannten "repeating parts" und werden somit auch in Zukunft keine nennenswerte Kostendegression erfahren. Weiterhin sind bei dieser herkömmlichen Bauweise die auftretenden Wäremverluste nur mit einem enormen Aufwand für thermische Isolierung in Grenzen zu halten.

Aus der US 5,084,363 geht eine Schmelzkarbonat-Brennstoffzellenanlage als bekannt hervor, bei der die wesentlichen Anlagenteile, wie Brennstoffzellenstapel, Reformiereinrichtung und katalytische Verbrennungseinrichtung innerhalb eines wärmeisolierten Schutzgehäuses angeordnet sind. Die innerhalb des Schutzgehäuses anfallende thermische Energie erhöht auch das Temperaturniveau in der Reformiereinrichtung. Auf diese Weise wird im Schutzgehäuse verfügbare Wärmeenergie beim Reformierprozeß genutzt.

Die Aufgabe der vorliegenden Erfindung ist es, ein Brennstoffzellenmodul zu schaffen, das eine kompakte Bauweise der Brennstoffzellenanlage gestattet, wobei der Wirkungsgrad der Reformiereinrichtung verbessert wird.

Diese Aufgabe wird gemäß der vorliegenden Erfindung dadurch gelöst, daß die katalytische Verbrennungseinrichtung und die Reformierungseinrichtung, die mit der Brennstoffzellenanordnung in dem thermisch isolierenden Schutzgehäuse zusammengefaßt sind, als eine integrierte Einheit ausgebildet sind, in der ein rekuperativer Wärmeübergang der bei der katalytischen Verbrennung erzeugten thermischen Energie durch Metall in eine Reformierzone der integrierten Einheit erfolgt. Hierdurch wird vorteilhafterweise die Temperatur beim Reformierungsprozeß erhöht und der Wirkungsgrad verbessert.

Ein wesentlicher Vorteil des erfindungsgemäßen Brennstoffzellenmoduls ist eine kostengünstige, serienmäßige Herstellung der Hauptkomponenten einer Brennstoffzellenanlage in einem Modul zusammengefaßt. Ein weiterer sehr beträchtlicher Vorteil ist eine wesentliche Erhöhung des Wirkungsgrads der das erfindungsgemäße Brennstoffzellenmodul enthaltenden Anlage durch Verminderung der thermischen Verluste. Ein weiterer Vorteil ist der verminderte Aufwand bei der Verschaltung der Hauptkomponenten der Brennstoffzellenanlage mit der dann noch notwendigen verbleibenden Anlagenperipherie, verbunden mit einer beträchtlichen Verminderung des Aufwands bei der thermischen Isolierung der Anlage.

Gemäß einer bevorzugten Ausführungsform der Erfindung sind die katalytische Verbrennungseinrichtung, die Reformierungseinrichtung und die Brennstoffzellenanordnung ohne den Strömungsquersclmitt zwischen diesen Komponenten direkt miteinander verbunden. Der Vorteil hiervon ist eine beträchtliche Verminderung der Strömungsverluste.

Gemäß einer weiteren Ausführungsform des erfindungsgemäßen Brennstoffzellenmoduls ist die katalytische Verbrennungseinrichtung in dem Kathodenkreislauf zwischen den Kathodenausgang und den Kathodeneingang der Brennstoffzellenanordnung geschaltet und zum Beimischen des verbrannten Brenngases vom Anodenausgang der Brennstoffzellen in den Kathodengasstrom unter Verbrennung der brennbaren Restbestandteile des beigemischten verbrannten Brenngases ausgebildet. Der Vorteil hiervon ist die Nutzung der restlichen brennbaren Bestandteile des Anodenabgases (Brenngases) und die Bereitstellung der für die Kathoden der Brennstoffzellen notwendigen Mengen an CO₂.

Gemäß einer anderen Ausführungsform ist es vorgesehen, daß die Gasströme vom Anodenausgang und vom Kathodenausgang der Brennstoffzellen unmittelbar nach den Brennstoffzellen zusammengefaßt werden, wodurch sich vorteilhafterweise ein pneumatischer Kurzschluß ergibt, so daß jeglicher Differenzdruck zwischen den Gasströmen in der Brennstoffzellenanordnung vermieden wird, welche Differenzdrücke sonst zerstörerische Auswirkungen haben können.

Gemäß einer weiteren Ausführung ist es vorgesehen, daß eine zur Vorwärmung des Brenngases dienende Brenngasvorwärmeinrichtung in die Wärmetauscher-Reformereinheit integriert ist. Dies hat den Vorteil, daß die Temperatur in der Reformierungseinrichtung weiter erhöht wird, wodurch sich ein noch besserer Reformierungswirkungsgrad ergibt, da dieser umso höher ist, je heißer die Reformierungseinheit betrieben wird.

Gemäß einer anderen Ausführungsform ist es vorgesehen, daß weiterhin ein Wärmetauscher zur Auskopplung von Nutzwärme aus dem Gasstrom innerhalb des Schutzgehäuses angeordnet ist. Hierdurch wird der Schaltungsaufwand an der Anlagenperipherie weiter vereinfacht.

Gemäß einer weiteren Ausführungsform ist eine innerhalb des Schutzgehäuses angeordnete und durch einen außerhalb des Schutzgehäuse befindlichen Antrieb angetriebene Gebläseeinrichtung zur Umwälzung des Kathodengasstroms vorgesehen. Dies kann dadurch weitergebildet sein, daß die Gebläseeinrichtung in Strömungsrichtung vor der Brennstoffzellenanordnung angeordnet und mit den Kathodeneingängen gekoppelt ist. Hierdurch wird die strömungstechnische Verschaltung innerhalb des Moduls wesentlich vereinfacht.

Die beiden vorgenannten Ausführungsformen können weiterhin dadurch ausgestaltet sein, daß die Gebläseeinrichtung mit ihrem Antrieb über eine durch das Schutzgehäuse geführte Kraftübertragungseinrichtung, insbesondere eine Antriebswelle gekoppelt ist, über die Frischluft von außerhalb des Schutzgehäuses unter Kühlung der Kraftübertragungseinrichtung in den Kathodengasstrom eingeführt wird. Hierdurch wird die thermische Belastung der Gebläseeinrichtung vermindert und dadurch deren Standzeit wesentlich verbessert.

Gemäß einer besonders vorteilhaften Ausführungsform kann es vorgesehen sein, daß die katalytische Verbrennungseinrichtung durch eine auf der gasseitigen Oberfläche des Wärmetauschers aufgebrachte katalytisch wirksame Beschichtung gebildet ist, wobei das zu verbrennende Anodengas (Brenngas) dem Kathodengasstrom vor oder in dem Wärmetauscher beigemischt wird. Die beträchtlichen Vorteile dieser Ausführungsform sind, daß der katalytische Brenner entfällt, daß die Verbrennungswärme der Brenngasreste direkt auf der Wärmetauscheroberfläche freigesetzt und somit ein optimaler Übergang in den Nutzwärmekreislauf gewährleistet ist, und daß die katalytische Substanz optimal gekühlt und deren Überhitzung sicher vermieden wird.

Dies kann dadurch weitergebildet sein, daß die katalytisch wirksame Beschichtung durch eine Nickelschicht gebildet ist. Der Vorteil hiervon ist eine besonders kostengünstige Herstellung der katalytischen Verbrennungseinrichtung.

Gemäß der vorliegenden Erfindung ist es vorgesehen, daß die in dem Schutzgehäuse zusammengefaßten Komponenten eine bauliche Einheit bilden. Hierdurch wird eine hohe Wirtschaftlichkeit bei der Herstellung des Brennstoffzellenmoduls und beim Bau der Brennstoffzellenanlage gewährleistet.

Schließlich ist es gemäß der vorliegenden Erfindung vorgesehen, daß der Brennstoffzellenmodul mit weiteren Modulen zur Bildung größerer Brennstoffzellenanlagen koppelbar ist. Hierdurch ist es vorteilhafterweise möglich, auch größere Anlagen durch modularen Aufbau kostengünstig herzustellen.

Im folgenden wird zunächst der herkömmliche Aufbau einer Brennstoffzellenanlage und dann ein Ausführungsbeispiel der Erfindung anhand der Zeichnung erläutert.

Es zeigen:
Fig. 1 ein Blockschaltbild eines Beispiels einer Brennstoffzellenanlage mit einem Brennstoffzellenmodul gemäß einem Ausführungsbeispiel der vorliegenden Erfindung;
Fig. 2 eine Schnittansicht durch ein Brennstoffzellenmodul gemäß einem weiteren Ausführungsbeispiel der vorliegenden Erfindung;
Fig. 3 ein Blockschaltbild einer Brennstoffzellenanlage herkömmlichen Aufbaus.

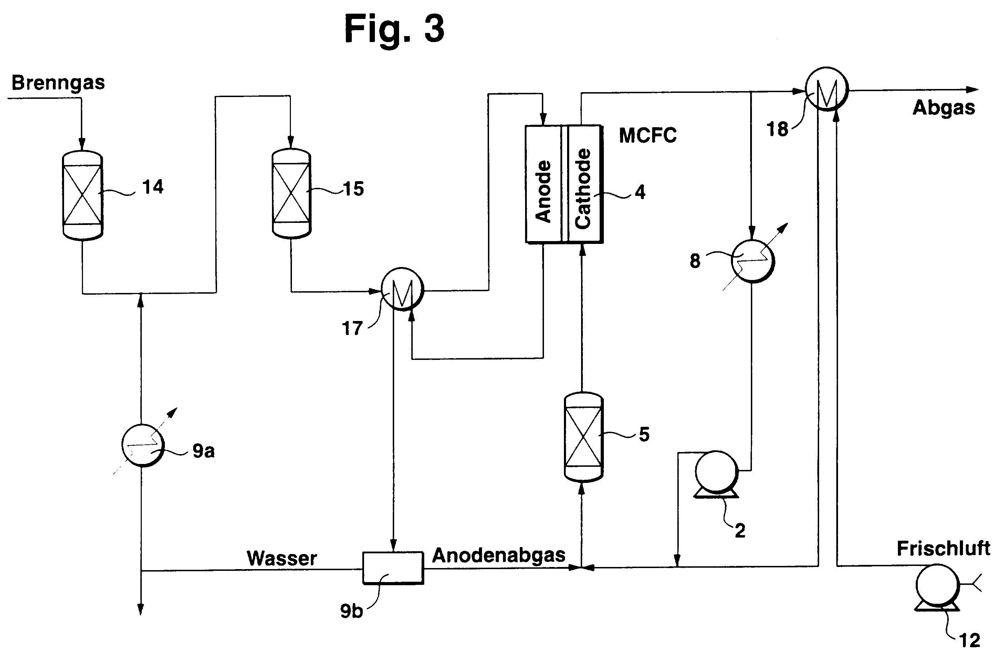

Zunächst soll anhand der Fig. 3 ein Beispiel einer herkömmlich aufgebauten Brennstoffzellenanlage erläutert werden. Ein Brennstoffzellenstapel 4, der durch eine Anordnung von Hochtemperaturbrennstoffzellen mit Alkalikarbonat-Schmelzelektrolyten (MCFC-Zellen) gebildet ist, enthält im Kathodenkreislauf eine an den Kathodeneingang angeschlossene katalytische Verbrennungseinrichtung 5 sowie zwischen den Kathodenausgang des Brennstoffzellenstapels 4 und die katalytische Verbrennungseinrichtung 5 geschaltet einen Wärmetauscher 8 zur Nutzwärmeauskoppelung und eine Gebläseeinrichtung 2 zur Aufrechterhaltung des Kathodenkreislaufs. Das letztlich dem Anodeneingang des Brennstoffzellenstapels 4 zuzuführende Brenngas wird zunächst einer Entschwefelungseinrichtung 14 und danach einer Vorreformierungseinrichtung 15 und vor dort über einen Wärmetauscher 17 zur Brenngasvorheizung dem Anodeneingang des Brennstoffzellenstapels 4 zugeführt. Vom Anodenausgang des Brennstoffzellenstapels 4 wird das verbrannte Brenngas über die andere Seite des Wärmetauschers 17 zur Brenngasvorheizung einer Kondensationseinrichtung 9b zugeführt, wo das in dem verbrannten Brenngas enthaltene Wasser abgetrennt wird. Von der Kondensationseinrichtung 9b wird das Wasser zum Teil über einen Dampfgenerator 9a zwischen der Entschwefelungseinrichtung 14 und der Vorreformierungseinrichtung 15 als Dampf in das zugeführte Brenngas beigemischt und im übrigen verworfen. Von der Kondensationseinrichtung 9b wird das verbrannte Anodenabgas zwischen der Gebläseeinrichtung 2 und der katalytischen Verbrennungseinrichtung 5 in den Kathodengasstrom zugemischt. Aus dem Kathodengasstrom wird das überschüssige Abgas über die Primärseite eines Abgaswärmetauschers 18 an die Umgebung abgegeben. Das abgegebene Abgas wird durch Frischluft ersetzt, die durch ein Frischluftgebläse 12 angesaugt und über die Sekundärseite des Abgaswärmetauschers 18 zwischen der Gebläseeinrichtung 2 und der katalytischen Verbrennungseinrichtung 5 in den Kathodengaskreislauf gemischt wird.

Bei einem solchen herkömmlichen Aufbau einer Anlage mit Hochtemperaturbrennstoffzellen sind somit eine große Anzahl von einzelnen Komponenten gastechnisch und regelungstechnisch miteinander zu verschalten. Dies hat die genannten Nachteile, nämlich daß zum einen beträchtliche Kosten an der Anlagenperipherie entstehen, und zum anderen, daß ein hoher Isolationsaufwand betrieben werden muß, um die Wärmeverluste an den auf hoher Temperatur arbeitenden Anlagenkomponenten und den Leitungsverbindungen dazwischen in Grenzen zu halten.

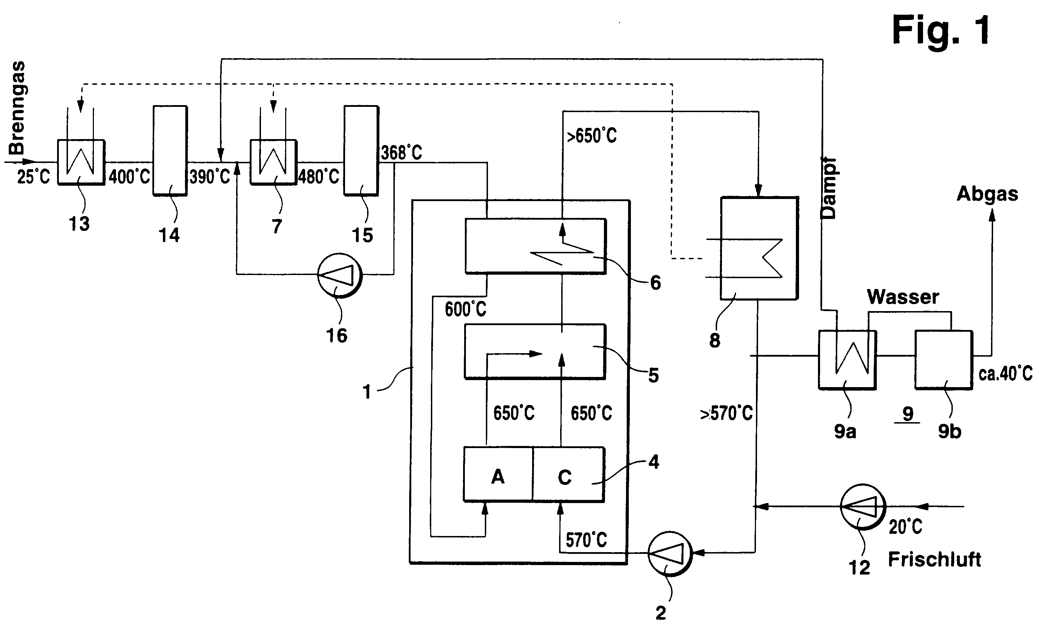

Fig. 1 zeigt ein Blockschaltbild einer Brennstoffzellenanlage mit einem Brennstoffzellenmodul nach einem ersten Ausführungsbeispiel der vorliegenden Erfindung. Ein Brennstoffzellenstapel 4 ist zusammen mit einer katalytischen Verbrennungseinrichtung 5 und einer Wärmetauscher-Reformereinheit 6 von einem Schutzgehäuse 1 umgeben, welches die drei Komponenten 4, 5 und 6 auch gegen die Umgebung thermisch isoliert. Der Brennstoffzellenstapel 4 verfügt über einen Anodeneingang zur Zuführung von Brenngas zu den Anoden der Brennstoffzellen, einen Anodenausgang zur Abführung des verbrannten Brenngases von den Anoden, einen Kathodeneingang zur Zuführung von Kathodengas (Oxidatorgas) zu den Kathoden der Brennstoffzellen, sowie einen Kathodenausgang zur Abführung des verbrauchten Kathodengases von den Kathoden. Der Anodenausgang und der Kathodenausgang sind direkt mit der katalytischen Verbrennungseinrichtung 5 gekoppelt, wo das verbrannte Brenngas dem die katalytische Verbrennungseinrichtung 5 passierenden Kathodengasstrom beigemischt wird. Der Ausgang der katalytischen Verbrennungseinrichtung 5 ist mit dem Eingang der Primärseite der Wärmetauscher-Reformereinheit 6 gekoppelt, deren Ausgang mit der Primärseite eines außerhalb des Schutzgehäuses 1 befindlichen Wärmetauschers 8 zur Auskoppelung der Nutzwärme aus dem Kathodengasstrom verbunden ist. Der Ausgang der Primärseite des Wärmetauschers 8 ist über eine Gebläseeinrichtung 2 mit dem Kathodeneingang des Brennstoffzellenstapels gekoppelt, wodurch der Kathodenkreislauf geschlossen wird. Das in dem Brennstoffzellenstapel 4 zu verbrennende Brenngas wird einer Brenngasvorwärmungseinrichtung 13 zugeführt. Diese ist mit einer Entschwefelungseinrichtung 14 gekoppelt, welche ihrerseits über einen Wärmetauscher 7 zur Brenngasvorwärmung an eine Vorreformierungseinrichtung 15 angeschlossen ist. Der Ausgang der Vorreformierungsvorrichtung 15 ist mit dem Eingang der Reformierungseinrichtung in der Wärmetauscher-Reformereinheit 6 gekoppelt, deren Ausgang an den Anodeneingang des Brennstoffzellenstapels 4 angeschlossen ist. Am Ausgang der Vorreformierungseinrichtung 15 zweigt eine Leitung zu einer Gebläseeinrichtung 16 ab, mit der ein Teil des die Vorreformierungseinrichtung 15 verlassenden Gasstroms zum Eingang der Brenngaserwärmungseinrichtung 7 zurückgeführt wird. In Richtung des Gasstroms nach dem Wärmetauscher 8 zweigt von der den Wärmetauscher 8 mit der Gebläseeinrichtung 2 verbindenden Leitung eine Leitung ab, die einen Abgasweg 9 bildet, in den ein Dampferzeuger 9a mit ihrer primären Seite und eine Kondensationseinrichtung 9b geschaltet ist. Von der Flüssigkeitsseite der Kondensationseinrichtung 9b führt eine Leitung zur Sekundärseite des Dampferzeugers 9a, um dieser einen Teil des in der Kondensationseinrichtung 9b kondensierten Wassers zur Verdampfung zuzuführen, von wo eine Dampfleitung zurück in den Brenngasweg führt und dort in die Leitung zwischen der Entschwefelungseinrichtung 14 und dem Wärmetauscher 7 zur Brenngasvorwärmung mündet. Das über den Abgasweg 9 aus dem Kathodenkreislauf entnommene Abgas wird durch Frischluft ersetzt, die über ein Frischluftgebläse 12 in die Leitung zwischen dem Nutzwärmetauscher 8 und der Gebläseeinrichtung 2 eingebracht wird.

Das durch die Gebläseeinrichtung 2 geförderte Kathodengas (Oxydatorgas) erreicht den Kathodeneingang des Brennstoffzellenstapels 4 mit einer Temperatur von ca. 570°C, wird durch die Brennstoffzellenreaktionen aufgeheizt und verläßt den Brennstoffzellenstapel 4 mit ca. 650°C. Da an dieser Stelle immer noch genügend Sauerstoff in dem Kathodengas enthalten ist, dient dieses als Oxidans in der katalytischen Verbrennungseinrichtung 5, wo die restlichen brennbaren Bestandteile des vom Anodenausgang des Brennstoffzellenstapels 4 beigemischten Anodenabgases (Brenngases) katalytisch verbrannt und dabei auch das für den Kathodenbetrieb notwendige CO₂ erzeugt wird. Durch die katalytische Verbrennung wird das Gas weiter aufgeheizt, da auch das Anodenabgas mit etwa 650°C in den katalytischen Brenner eintritt. Das heiße Produktgas der katalytischen Verbrennungseinrichtung heizt im weiteren Verlauf die Wärmetauscher-Reformereinheit, wo die endothermen Reformierreaktionen des Brenngases erfolgen, und gelangt mit einer Temperatur von nicht unter 650°C zu dem Wärmetauscher 8 zur Nutzwärmeauskoppelung. Durch die Auskoppelung der Nutzwärme wird das Kathodengas auf eine Temperatur von nicht weniger als 570°C abgekühlt, wonach es durch Abgabe eines Teils des Kathodenabgases in den Abgasweg 9 und Ersatz desselben durch über das Frischluftgebläse 12 zugeführte Frischluft mit einer Temperatur von etwa 570°C wieder den Kathodeneingang erreicht. Der Gasfluß im Kathodenkreis ist so abzustimmen, daß diese sich als vorteilhaft herausgestellten Temperaturen im wesentlich eingehalten und der Kühlbedarf des Brennstoffzellenstapels 4 gedeckt ist.

Das Brenngas, das zunächst in der Brenngasvorwärmungseinrichtung 13 von Umgebungstemperatur von etwa 25°C auf etwa 400°C aufgewärmt wird, wird nach dem Durchlaufen der Entschwefelungseinrichtung 14 mit einer Temperatur von etwa 390°C dem Wärmetauscher 7 zur weiteren Brenngasvorwärmung auf eine Temperatur von etwa 480°C zugeführt, wonach es die Vorreformierungseinrichtung 15 durchläuft. Bei der Vorreformierungsreaktion kühlt sich das Brenngas von den genannten 480°C auf etwa 368°C ab. Die für die Reformierungsreaktionen erforderliche Dampfmenge wurde dem Brenngas vom Dampferzeuger 9a nach der Entschwefelungseinrichtung 14 zugeführt.

Von der Vorreformierungseinrichtung 14 wird das Brenngas der Reformerseite der Wärmetauscher-Reformereinheit 6 zugeführt, wo es erforderlichenfalls aufgeheizt, reformiert und dem Anodeneingang des Brennstoffzellenstapels 4 mit einer Temperatur von etwa 600°C zugeführt wird. Je heißer der Reformierungsprozeß in der Wärmetauscher-Reformereinheit 6 betrieben wird, desto besser ist der Reformierungswirkungsgrad. Daher ist es besonders günstig, daß die Wärmetauscher-Reformereinheit mit dem von der katalytischen Verbrennungseinrichtung 5 abgegebenen heißen Kathodenkreisgas beheizt wird.

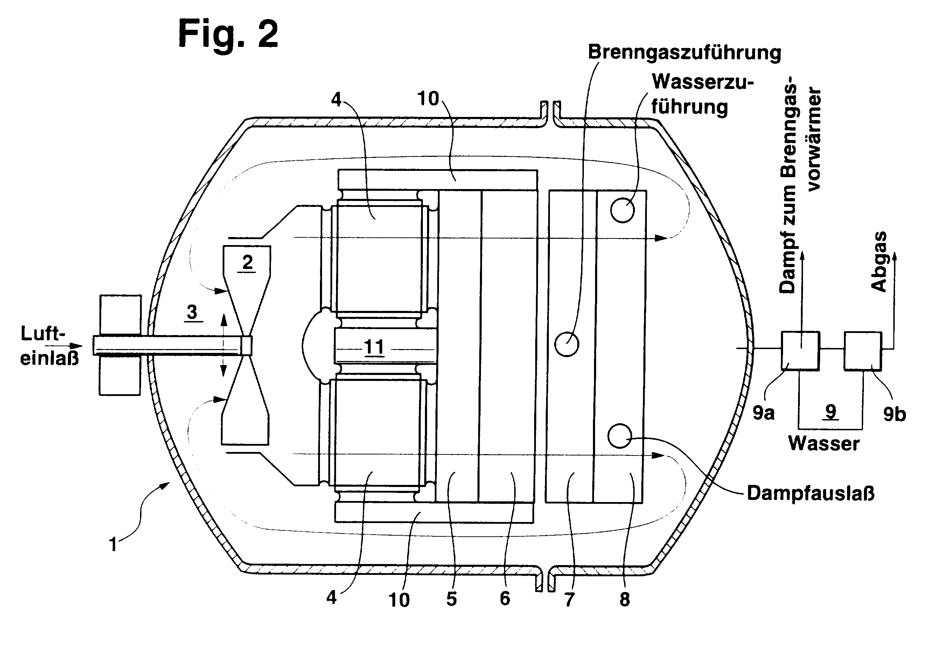

Fig. 2 zeigt im Querschnitt ein Brennstoffzellenmodul gemäß einem weiteren Ausführungsbeispiel der Erfindung. In einem Schutzgehäuse 1, das gegen die Umgebung thermisch isoliert ist, sind zwei Brennstoffzellenstapel 4 zu einer Brennstoffzellenanordnung zusammengefaßt, deren Kathodeneingänge über eine Lufthutze mit einer ebenfalls innerhalb des Schutzgehäuses 1 angeordneten Gebläseeinrichtung gekoppelt ist, die als Axialgebläse ausgebildet ist. Dieses Axialgebläse dient dazu, den Kathodengaskreislauf aufrecht zu erhalten. Die Anodeneingänge der beiden Brennstoffzellenstapel sind über jeweilige seitlich angebrachte Brenngaszuführungseinrichtungen (Manifolds) 10 mit der Reformierungsseite einer Wärmetauscher-Reformereinheit 6 gekoppelt. Die Anodenausgänge der Brennstoffzellenstapel 4 sind über eine zentrale Gasabführungseinrichtung (Manifold) 11 mit einer katalytischen Verbrennungseinrichtung 5 gekoppelt, deren Ausgang mit dem Eingang der Wärmetauscherseite der Wärmetauscher-Reformereinheit 6 gekoppelt ist. Das Kathodenabgas wird direkt von den Kathodenausgängen an die katalytische Verbrennungseinrichtung 6 abgegeben. Weiterhin sind in dem Schutzgehäuse 1 auch ein Wärmetauscher 7 zur Brenngasvorwärmung und ein Wärmetauscher 8 zur Auskoppelung der Nutzwärme aus dem Kathodengasstrom angeordnet.

Die Gebläseeinrichtung 2 wird von einem außerhalb des Schutzgehäuses angeordneten Antrieb über eine Welle angetrieben, welche hohl ist, um über die hohle Welle die Frischluft für den Kathodengasstrom zuzuführen. Durch diese Frischluftzufuhr wird die Gebläseeinrichtung 2, insbesondere deren Lagerung gekühlt. Aus dem Kathodengasstrom wird das Abgas über den Abgasweg 9, welcher einen Dampferzeuger 9a und eine Kondensationseinrichtung 9b enthält, an die Umgebung abgegeben.

Mittels der Gebläseeinrichtung 2 wird der Kathodengasstrom innerhalb des Schutzgehäuses 1 umgewälzt, wobei der Kathodengasstrom von der Gebläseeinrichtung 2 zunächst in die Kathodeneingänge der Brennstoffzellenstapel 4 eintritt und nach deren Passieren als verbrauchtes Kathodenabgas von den Kathodenausgängen in die katalytische Verbrennungseinrichtung 5 eintritt, wo auch der von der Anodengasabführungseinrichtung 11 abgeführte Strom des verbrannten Anodengases (Brenngases) beigemischt wird. In der katalytischen Verbrennungseinrichtung 5 werden die restlichen brennbaren Bestandteile des Anodenabgases verbrannt und dadurch das Gasgemisch im Kathodenkreis weiter erhitzt. In der sich unmittelbar an die katalytische Verbrennungseinrichtung anschließenden Wärmetauscher-Reformereinheit 6 wird die in der katalytischen Verbrennungseinrichtung 5 freigesetzte Wärme dazu verwendet, die endothermen Reformierreaktionen bei hohen Temperaturen durchführen.

Der die Wärmetauscher-Reformereinheit 6 verlassende Kathodengasstrom wird dann durch die Primärseite des Wärmetauschers 7 zur Brenngasvorwärmung geführt, über dessen Sekundärseite das darin vorgewärmte Brenngas in die Reformerseite der Wärmetauscher-Reformereinheit 6 geleitet wird. Nach dem Verlassen des Wärmetauschers 7 wird der Kathodengasstrom durch den Wärmetauscher 8 geführt, aus welchem die Nutzwärme ausgekoppelt wird.

Gemäß einem weiteren, in den Figuren nicht eigens darstellten Ausführungsbeispiel kann die katalytische Verbrennungseinrichtung 5 durch eine auf der gasseitigen Oberfläche eines innerhalb des Schutzgehäuses 1 angeordneten Wärmetauschers 8 zur Entkoppelung der Nutzwärme aufgebrachte katalytisch wirksame Beschichtung gebildet sein, wobei das Brenngas vom Anodenausgang dem Kathodengasstrom vor oder in dem Wärmetauscher 8 zugemischt wird. Die katalytisch wirksame Beschichtung kann durch jeden üblichen Katalysator gebildet sein, vorteilhafterweise aber ist sie durch eine Nickelschicht gebildet. Dadurch wird die Funktion der katalytischen Verbrennungseinrichtung und des Wärmetauschers in einer Baueinheit vereint, wobei die Brenngasreste des Anodenabgases dann auf der katalytisch wirksamen Oberfläche des Wärmetauschers verbrennen. Dadurch kann zum einen eine eigens vorgesehene katalytische Verbrennungseinrichtung entfallen und andererseits wird die Verbrennungswärme der Brenngasreste direkt auf der Wärmetauscheroberfläche freigesetzt, so daß ein optimaler Wärmeübergang in den Nutzwärmekreislauf gewährleistet ist. Weiterhin wird die katalytische Beschichtung optimal gekühlt und dadurch deren Überhitzung und Verschlechterung oder Zerstörung sicher vermieden.

## Patentansprüche

1. Brennstoffzellenmodul mit einer durch in einem oder mehreren Brennstoffzellenstapeln (4) angeordneten Brennstoffzellen gebildeten und von einem thermisch isolierenden Schutzgehäuse (2) umgebenen Brennstoffzellenanordnung mit einem Anodeneingang zur Zuführung von Brenngas zu den Anoden der Brennstoffzellen, einem Anodenausgang zur Abführung des verbrannten Brenngases von den Anoden, einem Kathodeneingang zur Zuführung von Kathodengas zu den Kathoden der Brennstoffzellen und einem Kathodenausgang zur Abführung des verbrauchten Kathodengases von den Kathoden, wobei die Brennstoffzellenanordnung mit einer katalytischen Verbrennungseinrichtung (5) zur Verbrennung brennbarer Restbestandteile des verbrannten Brenngases sowie einer Reformierungseinrichtung (6) zur Reformierung des dem Anodeneingang der Brennstoffzellen zuzuführenden Brenngases gekoppelt ist, wobei die katalytische Verbrennungseinrichtung (5) und die Reformierungseinrichtung (6) mit der Brennstoffzellenanordnung in dem thermisch isolierenden Schutzgehäuse (1) zusammengefaßt angeordnet sind, wobei thermische Energie aus dem im Schutzgehäuse (2) vorhandenen Wärmeinhalt auf das zu reformierende Brenngas übertragen wird, dadurch gekennzeichnet, daß die Reformierungseinrichtung als Wärmetauscher-Reformereinheit (6) ausgebildet ist, die mit der katalytischen Verbrennungseinrichtung (5) eine integrierte Einheit bildet, in der die bei der katalytischen Verbrennung freiwerdende Wärme durch metallische Leitung in eine Reformierzone übertragen wird.

2. Brennstoffzellenmodul nach Anspurch 1, dadurch gekennzeichnet, daß die katalytische Verbrennungseinrichtung (5), die Reformierungseinrichtung (6) und die Brennstoffzellenanordnung ohne den Strömungsquerschnitt zwischen diesen Komponenten verengende Rohrleitungen direkt miteinander verbunden sind.

3. Brennstoffzellenmodul nach Anspruch 1 oder 2, dadurch gekennzeichnet, daß die katalytische Verbrennungseinrichtung (5) in den Kathodenkreislauf zwischen dem Kathodenausgang und dem Kathodeneingang der Brennstoffzellen geschaltet ist, und daß die katalytische Verbrennungseinrichtung (5) zum Beimischen des verbrannten Brenngases vom Anodenausgang in den Kathodengastrom unter Verbrennung der brennbaren Restbestandteile des beigemischten Brenngases ausgebildet ist.

4. Brennstoffzellenmodul nach einem der Ansprüche 1 bis 3, dadurch gekennzeichnet, daß die Gasströme vom Anodenausgang und vom Kathodenausgang der Brennstoffzellen unmittelbar an der Brennstoffzellenanordnung zusammengeführt werden, so daß jegliche Druckdifferenz zwischen den Gasströmen in den Brennstoffzellen vermieden wird.

5. Brennstoffzellenmodul nach einem der Ansprüche 1 bis 4, dadurch gekennzeichnet, daß eine zur Vorwärmung des Brenngases dienende Brenngasvorwärmungseinrichtung (7) in die Wärmetauscher-Reformereinheit (6) integriert ist.

6. Brennstoffzellenmodul nach einem der Ansprüche 1 bis 5, dadurch gekennzeichnet, daß weiterhin ein Wärmetauscher (8) zur Auskoppelung von Nutzwärme aus dem Kathodengasstrom innerhalb des Schutzgehäuses (1) angeordnet ist.

7. Brennstoffzellenmodul nach einem der Ansprüche 1 bis 6, gekennzeichnet durch eine innerhalb des Schutzgehäuses (1) angeordnete und durch einen außerhalb des Schutzgehäuses (1) befindlichen Antrieb angetriebene Gebläseeinrichtung (2) zur Umwälzung des Kathodengasstroms.

8. Brennstoffzellenmodul nach Anspruch 7, dadurch gekennzeichnet, daß die Gebläseeinrichtung (2) in Strömungsrichtung vor der Brennstoffzellenanordnung angeordnet und mit dem Kathodeneingang gekoppelt ist.

9. Brennstoffzellenmodul nach Anspruch 7 oder 8, dadurch gekennzeichnet, daß die Gebläseeinrichtung (2) mit ihrem Antrieb über eine durch das Schutzgehäuse (l) geführte Kraftübertragungseinrichtung, insbesondere eine Antriebswelle, gekoppelt ist, über die Frischluft von außerhalb des Schutzgehäuses (1) unter Kühlung der Kraftübertragungseinrichtung in den Kathodengasstrom eingeführt wird.

10. Brennstoffzellenmodul nach einem der Ansprüche 6 bis 9, dadurch gekennzeichnet, daß die katalytische Verbrennungseinrichtung (5) durch eine auf der gasseitigen Oberfläche des Wärmetauschers (8) aufgebrachte katalytisch wirksame Beschichtung gebildet ist, wobei das Brenngas vom Anodenausgang dem Kathodengasstrom vor oder in dem Wärmetauscher (8) beigemischt wird.

11. Brennstoffzellenmodul nach Anspruch 10, dadurch gekennzeichnet, daß die katalytisch wirksame Beschichtung durch eine Nickelschicht gebildet ist.

## Claims

1. Fuel cell module comprising a fuel cell arrangement which is formed by fuel cells arranged in one or more fuel cell stacks (4) and is surrounded by a thermally insulating protective housing (2) and comprises an anode inlet for supplying fuel gas to the anodes of the fuel cells, an anode outlet for removing the burnt fuel gas from the anodes, a cathode inlet for supplying cathode gas to the cathodes of the fuel cells and a cathode outlet for removing the spent cathode gas from the cathodes, the fuel cell arrangement being coupled to a catalytic combustion means (5) for burning combustible residual constituents of the burnt fuel gas and to a reforming means (6) for reforming the fuel gas which is to be supplied to the anode inlet of the fuel cells, the catalytic combustion means (5) and the reforming means (6) being arranged collectively with the fuel cell arrangement in the thermally insulating protective housing (1), thermal energy being transferred from the enthalpy present in the protective housing (2) to the fuel gas to be reformed, characterized in that the reforming means is designed as a heat exchanger reformer unit (6) which, together with the catalytic combustion means (5), forms an integrated unit in which heat released in the course of the catalytic combustion is transferred, via metallic conduction, into a reforming zone.

2. Fuel cell module according to Claim 1, characterized in that the catalytic combustion means (5), the reforming means (6) and the fuel cell arrangement are connected directly to one another without conduits that constrict the cross-section of flow between these components.

3. Fuel cell module according to Claim 1 or 2, characterized in that the catalytic combustion means (5) is connected into the cathode circuit between the cathode outlet and the cathode inlet of the fuel cells and in that the catalytic combustion means (5) is designed for admixing the burnt fuel gas from the anode outlet into the cathode gas stream with burning of the combustible residual constituents of the admixed fuel gas.

4. Fuel cell module according to any one of Claims 1 to 3, characterized in that the gas streams from the anode outlet and from the cathode outlet of the fuel cells are brought together directly at the fuel cell arrangement, so that any pressure differential between the gas streams in the fuel cells is avoided.

5. Fuel cell module according to any one of Claims 1 to 4, characterized in that a fuel gas preheating means (7) which serves to preheat the fuel gas is integrated into the heat exchanger reformer unit (6).

6. Fuel cell module according to any one of Claims 1 to 5, characterized in that, in addition, a heat exchanger (8) is disposed inside the protective housing (1) for extracting useful heat from the cathode gas stream.

7. Fuel cell module according to any one of Claims 1 to 6, characterized by a blower unit (2) for the purpose of recirculating the cathode gas stream, said blower unit being disposed inside the protective housing (1) and being driven by a drive situated outside the protective housing (1).

8. Fuel cell module according to Claim 7, characterized in that the blower unit (2) is disposed upstream of the fuel cell arrangement and is coupled to the cathode inlet.

9. Fuel cell module according to Claim 7 or 8, characterized in that the blower unit is coupled to its drive via a power transmission means, in particular a drive shaft, which is run through the protective housing (1) and via which fresh air from outside the protective housing (1) is introduced into the cathode gas stream with cooling of the power transmission means.

10. Fuel cell module according to any one of Claims 6 to 9, characterized in that the catalytic combustion means (5) is formed by a catalytically active coating applied to the gas-side surface of the heat exchanger (8), the fuel gas from the anode outlet being admixed to the cathode gas stream before or in the heat exchanger (8).

11. Fuel cell module according to Claim 10, characterized in that the catalytically active coating is formed by a nickel layer.

## Revendications

1. Agencement modulaire de cellules électrochimiques avec un arrangement de cellules électrochimiques, entouré d'un boîtier de protection à isolation thermique (2) et formé d'un ou de plusieurs empilements (4) de cellules électrochimiques disposées, avec un conduit d'amenée aux anodes pour l'alimentation du gaz combustible aux anodes des cellules électrochimiques, un conduit de décharge des anodes pour l'évacuation du gaz brûlé en provenance des anodes, un conduit d'amenée aux cathodes pour l'alimentation du gaz de cathode aux cathodes des cellules électrochimiques, et un conduit de décharge des cathodes pour l'évacuation du gaz de cathodes brûlé en provenance des cathodes, l'arrangement de cellules électrochimiques étant couplé à un équipement de combustion catalytique (5) en vue de la combustion des constituants résiduels combustibles du gaz de combustion brûlé ainsi qu'un équipement de reformage (6) en vue du reformage du gaz de combustion à acheminer au conduit d'amenée aux anodes des cellules électrochimiques, l'équipement de combustion catalytique (5) et l'équipement de reformage (6) étant disposés de manière conjointe à l'arrangement de cellules électrochimiques dans le boîtier de protection à isolation thermique (1), l'énergie thermique en provenance du contenu thermique présent dans le boîtier de protection (2) étant transférée au gaz combustible à réformer, caractérisé en ce que l'équipement de reformage est construit en tant qu'unité de reformage à échangeur thermique (6), qui forme avec l'équipement de combustion catalytique (5) une unité intégrée, dans laquelle la chaleur qui se dégage lors de la combustion catalytique est transférée par l'intermédiaire d'un conduit métallique dans une zone de reformage.

2. Agencement modulaire de cellules électrochimiques selon la revendication 1, caractérisé en ce que l'équipement de combustion catalytique (5), l'équipement de reformage (6) et l'arrangement de cellules électrochimiques sont reliés directement les uns aux autres sans conduites tubulaires restreignant la section transversale d'écoulement entre ces composants.

3. Agencement modulaire de cellules électrochimiques selon la revendication 1 ou 2, caractérisé en ce que l'équipement de combustion catalytique (5) est branché dans le circuit des cathodes entre le conduit de décharge des cathodes et le conduit d'amenée aux anodes des cellules électrochimiques, et que l'équipement de combustion catalytique (5) est construit en vue du mélange du gaz de combustion brûlé en provenance du conduit de décharge aux anodes dans le courant de gaz de cathodes avec combustion des constituants résiduels combustibles du gaz de combustion qui y est mélangé.

4. Agencement modulaire de cellules électrochimiques selon l'une quelconque des revendications 1 à 3, caractérisé en ce que les courants de gaz en provenance du conduit de décharge des anodes et du conduit de décharge des cathodes des cellules électrochimiques sont combinés immédiatement à proximité de l'arrangement de cellules électrochimiques, de sorte qu'une différence de pression quelconque entre les courants de gaz dans les cellules électrochimiques soit évitée.

5. Agencement modulaire de cellules électrochimiques selon l'une quelconque des revendications 1 à 4, caractérisé en ce qu'un équipement de pré-chauffage du gaz de combustion (7), servant au pré-chauffage du gaz de combustion, est intégré dans l'équipement de reformage à échangeur thermique (6).

6. Agencement modulaire selon l'une quelconque des revendications 1 à 5, caractérisé en ce qu'un échangeur thermique (8) destiné au couplage de la chaleur utile en provenance du courant de gaz de cathodes est disposé de surcroît au sein du boîtier de protection (1).

7. Agencement modulaire de cellules électrochimiques selon l'une quelconque des revendications 1 à 6, caractérisé par un équipement de soufflage (2), disposé à l'intérieur du boîtier de protection (1) et entraîné par un entraînement situé à l'extérieur du boîtier de protection (1), en vue de la circulation du courant de gaz de cathodes.

8. Agencement modulaire de cellules électrochimiques selon la revendication 7, caractérisé en ce que l'équipement de soufflage (2) est disposé dans la direction d'écoulement avant l'arrangement de cellules électrochimiques et est couplé au conduit d'amenée aux cathodes.

9. Agencement modulaire de cellules électrochimiques selon la revendication 7 ou 8, caractérisé en ce que l'équipement de soufflage (2) avec son entraînement est couplée par l'intermédiaire d'un équipement de transfert de forces passant à travers le boîtier de protection (1), en particulier par l'intermédiaire d'un arbre d'entraînement, par l'intermédiaire duquel on introduit dans le courant de gaz de cathode, avec refroidissement de l'équipement de transfert de forces, de l'air frais en provenance de l'extérieur du boîtier de protection (1).

10. Agencement modulaire de cellules électrochimiques selon l'une quelconque des revendications 6 à 9, caractérisé en ce que l'équipement de combustion catalytique (5) est formé par un revêtement à action catalytique, appliqué sur la surface faisant face au gaz de l'échangeur thermique (8), le gaz de combustion en provenance du conduit de décharge des anodes étant mélangé au courant de gaz de cathodes avant l'échangeur thermique (8) ou dans ce dernier.

11. Agencement modulaire de cellules électrochimiques selon la revendication 10, caractérisé en ce que le revêtement à action catalytique est formé d'une couche de nickel.
